# EUROPÄISCHE PATENTSCHRIFT

(11) **EP 4 125 149 B1**
(45) Veröffentlichungstag und Bekanntmachung des Hinweises auf die Patenterteilung: **14.02.2024**
(21) Anmeldenummer: 22020201.4
(22) Anmeldetag: 03.05.2022
(51) Int. Cl.: H01M 10/653, H01M 50/514, H01M 50/54, H01M 50/503, H01M 50/105, H01M 50/293, H01M 50/296, H01M 50/213, H01M 50/107, H01M 50/211, H01M 50/545, H01M 50/547, H01M 10/052

(54) **ZELLMODUL MIT EINER MEHRZAHL VON ELEKTROCHEMISCHEN POUCH-ZELLEN UND FAHRZEUG**
CELL MODULE WITH A PLURALITY OF ELECTROCHEMICAL POUCH CELLS AND VEHICLE
MODULE CELLULAIRE POURVU D'UNE PLURALITÉ DE CELLULES POCHES ÉLECTROCHIMIQUES ET VÉHICULE

(30) Priorität: 16.07.2021 DE 102021118402
(43) Veröffentlichungstag der Anmeldung: 01.02.2023
(73) Patentinhaber: Dr. Ing. h.c. F. Porsche Aktiengesellschaft, 70435 Stuttgart (DE)
(72) Erfinder: Renz, Fadi, 70806 Kornwestheim (DE); Hovestadt, Lars, 71732 Tamm (DE)

(56) Entgegenhaltungen:
- KR-A- 20170 019 332
- KR-A- 20170 025 871
- US-A- 4 262 064
- US-A1- 2012 052 352
- US-B2- 10 249 919

## Beschreibung

Die Erfindung betrifft ein Zellmodul mit einer Mehrzahl von elektrochemischen Pouch-Zellen, wobei jede Pouch-Zelle mindestens eine erste und zweite Elektrode, einen zwischen den Elektroden angeordneten Separator und eine flexible Außenhülle aufweist. Ferner betrifft die Erfindung ein Fahrzeug mit einem solchen Zellmodul.

Pouch-Zellen, auch als Softpack- oder Coffeebag-Zellen bezeichnet, sind aus dem Stand der Technik in verschiedenen Ausführungsformen bekannt. Es handelt sich dabei um eine Bauform eines Lithium-Ionen-Akkumulators, wobei das elektrochemisch aktive Material im Unterschied zu Batterien mit festem Gehäuse (Hardcase) von einer flexiblen Außenhülle, beispielsweise aus einer Kunststoff-Aluminium-Verbundfolie, eingeschlossen ist. Durch diese Gestaltung weist eine Pouch-Zelle ein geringes Gewicht und kompakte Abmessungen auf, ist jedoch durch die dünne Hülle generell anfälliger gegenüber mechanischen Belastungen und Beschädigungen von außen und kann zudem bei einem Anstieg des Zellen-Innendrucks ihr Volumen vergrößern. Beide Einflüsse müssen beim Zusammenfassen der Zellen zu einem Zellstacks berücksichtigt werden, um neben einer kompakten Anordnung einen sicheren Betrieb zu gewährleisten. In diesem Zusammenhang ist aus der DE 10 2014 117 396 A1 ein Modul mit einem Stapel (Stack) aus quaderförmigen Pouch-Zellen bekannt, bei dem die einzelnen Zellen schräg zur Stapelrichtung orientiert sind.

KR 2017 0025871 A1 und US 10 249 919 B2 beschreiben Beispiele für toroidale Pouch-Zellenstapel.

Vor diesem Hintergrund stellt sich die Aufgabe, ein Zellmodul zur Verfügung zu stellen, in dem die Zellen in stabiler und kompakter Weise zusammengefasst sind und innerhalb des Zellmoduls effizient kontaktiert werden.

Zur Lösung der Aufgabe wird ein Zellmodul mit einer Mehrzahl von elektrochemischen Pouch-Zellen vorgeschlagen, wobei jede Pouch-Zelle mindestens eine erste und zweite Elektrode, einen zwischen den Elektroden angeordneten Separator und eine flexible Außenhülle aufweist, wobei jede Pouch-Zelle einen kreisförmigen Außenrand und ein in ihrer Mitte angeordnetes kreisförmiges Durchgangsloch aufweist, wobei am Außenrand jeder Pouch-Zelle ein äußerer Zellenpol und an einem radial innen liegenden Rand ein innerer Zellenpol angeordnet ist, wobei das Zellmodul einen zylinderstabförmigen inneren Stromabnehmer und einen als Zylindermantel ausgebildeten äußeren Stromabnehmer aufweist, wobei der innere Stromabnehmer sich entlang einer Mittelachse des Zellmoduls erstreckt und der äußere Stromabnehmer konzentrisch zu dem inneren Stromabnehmer angeordnet ist, wobei die Pouch-Zellen einen Stapel in Richtung der Mittelachse bilden und so angeordnet sind, dass der innere Stromabnehmer durch die Durchgangslöcher der Pouch-Zellen verläuft, wobei die inneren Zellenpole elektrisch leitend mit dem inneren Stromabnehmer verbunden sind und die äußeren Zellenpole elektrisch leitend mit dem äußeren Stromabnehmer verbunden sind.

Bei dem erfindungsgemäßen Zellmodul sind die einzelnen Pouch-Zellen auf dem zentralen, inneren Stromabnehmer aufgereiht und auf diese Weise entlang der Mittelachse übereinander gestapelt (gestackt). Der zylindrische innere Stromabnehmer dient dabei als Führung und Halteelement für die Pouch-Zellen und fungiert gleichzeitig zur elektrischen Kontaktierung der inneren Zellenpole.

Bevorzugt sind die einzelnen Pouch-Zellen im Wesentlichen als Kreisscheibe oder flacher Kreiszylinder mit einem zentralen Durchgangsloch ausgebildet, so dass sie durch diese Formgebung in einfacher und robuster Weise auf den inneren Stromabnehmer aufgesetzt und kontaktiert werden können. Insbesondere sind die Pouch-Zellen des Zellmoduls alle identisch ausgebildet. Die Abmessungen der Pouch-Zellen werden in Radialrichtung durch den Radius des äußeren Umfangs und senkrecht dazu durch die Ausdehnung in Dickenrichtung der Pouch-Zelle bestimmt. Vorzugsweise ist die Dicke jeder Pouch-Zelle maximal so groß wie der Radius des äußeren Umfangs, besonders bevorzugt maximal so groß wie der halbe Radius und ganz besonders bevorzugt maximal so groß wie ein Viertel des Radius. Neben dem inneren Stromabnehmer weist das Zellmodul einen zylindermantelförmigen äußeren Stromabnehmer auf, der die äußeren Zellenpole der Pouch-Zellen kontaktiert und gleichzeitig eine radiale Wandung bildet, durch die der Zellenstapel stabil eingefasst wird. Auf diese Weise sind die Pouch-Zellen kompakt und sicher gelagert, wobei die beiden Stromabnehmer neben der elektrischen Kontaktierung eine stabile mechanische Lagerung bzw. Fixierung der Zellen gewährleisten.

Vorzugsweise handelt es sich bei den Pouch-Zellen um Metall-Ionen-Akkumulatoren, insbesondere um Lithium-Ionen-Akkumulatoren. Die Elektroden und der Separator jeder Zelle sind insbesondere als Folien ausgebildet. Jede der Elektroden weist dabei insbesondere eine metallische Schicht auf, die als Stromableiter dient und eine weitere Schicht aus elektrochemisch aktivem Material, die flächig an der Metallschicht anliegt und vorzugsweise eine der beiden Oberflächen der Metallschicht vollständig bedeckt. Bei dem Separator kann es sich beispielsweise um eine, mit einem flüssigen Elektrolyten getränkte poröse Schicht handeln. Denkbar sind auch feste Polymerelektrolyte, die sowohl als Separator, als auch als lonenleiter fungieren. Die erfindungsgemäße Zelle weist mindestens eine Anode und eine Kathode auf, kann jedoch auch eine Mehrzahl von Anoden und Kathoden aufweisen, die beispielsweise stapelförmig in der Zelle angeordnet sind. Die Stromableiter der Anode und Kathode, bzw. der Anoden und Kathoden, sind jeweils elektrisch leitend mit einem der beiden Zellenpole verbunden. Vorzugsweise ist der Stromableiter der Anode mit dem inneren (und damit positiven) Zellenpol verbunden und der Stromableiter der Kathode ist mit dem äußeren (und damit negativen) Zellenpol. Alternativ kann auch der innere Zellenpol der negative Pol sein und der äußere Zellenpol der positive Pol.

Die Anordnung aus Elektroden und Separator ist bei jeder Zelle von einer flexiblen Außenhülle umgeben, wobei die Außenhülle die Elektroden und den Separator insbesondere gas- und oder flüssigkeitsdicht einschließt. Die Außenhülle kann beispielsweise aus einem Kunststoff-Metall-Verbundmaterial bestehen. Der innere und der äußere Stromabnehmer bestehen vorzugsweise jeweils aus einem Metall wie beispielsweise Kupfer oder Aluminium oder einer kupfer- und/oder aluminiumhaltigen Legierung. Beispielsweise kann es sich bei dem inneren Stromabnehmer um einen stabförmigen Voll- oder Hohlzylinder handeln. Der äußere Stromabnehmer kann beispielsweise durch ein, zu einem Zylindermantel geformtes Blech gebildet werden.

Gemäß einer vorteilhaften Ausgestaltung der Erfindung sind zwischen den Pouch-Zellen Wärmeleitkissen, Gap Pads, angeordnet. Die Wärmeleitkissen sind insbesondere Kreisscheiben mit einem mittig angeordneten Durchgangsloch, das von dem inneren Stromabnehmer durchragt wird. Auf diese Weise bilden die Pouch-Zellen und die Wärmeleitkissen entlang des Stromabnehmers einen Stapel, in dem sich Pouch-Zellen und Wärmeleitkissen abwechseln. Der innere Stromabnehmer fungiert damit also vorteilhafterweise neben der Kontaktierung der inneren Zellenpole als Haltelement und Führung der Wärmeleitkissen. Der Radius der radialen Ausdehnung der Wärmeleitkissen ist insbesondere maximal so groß wie der Radius der Pouch-Zellen. Vorzugsweise ist der Radius der Wärmeleitkissen kleiner als der der Pouch-Zellen. Die Wärmeleitkissen des Zellmoduls sind insbesondere alle identisch ausgebildet.

Eine vorteilhafte Ausgestaltung der Erfindung sieht vor, dass der innere Zellenpol durch zwei streifenförmige Leiter gebildet ist und/oder der äußere Zellenpol durch zwei streifenförmige Leiter gebildet ist, wobei sich die beiden Leiter in Radialrichtung erstrecken in Umfangsrichtung um 180° zueinander versetzt angeordnet sind. Insbesondere können die Leiter Streifen aus Metallblech, beispielsweise aus Kupfer oder Aluminium sein. Alternativ ist denkbar, dass sich der innere und/oder der äußere Zellenpol ringförmig über den gesamten Innenrand beziehungsweise Außenrand der Pouch-Zelle erstreckt und über den gesamten (inneren oder äußeren) Umfang am inneren bzw. äußeren Stromabnehmer anliegt.

Eine vorteilhafte Ausgestaltung der Erfindung sieht vor, dass der innere Zellenpol durch mindestens drei streifenförmige Leiter gebildet ist und/oder der äußere Zellenpol durch mindestens drei streifenförmige Leiter gebildet ist, wobei sich die Leiter in Radialrichtung erstrecken und gleichmäßig über die Umfangsrichtung verteilt angeordnet sind. Anders ausgedrückt kann der innere und/oder der äußere Zellenpol jeweils durch n streifenförmige Leiter gebildet sein, die um 360°/n gegeneinander versetzt sind.

Gemäß einer vorteilhaften Ausgestaltung der Erfindung sind die streifenförmigen Leiter des inneren Zellenpols mit dem inneren Stromabnehmer verschweißt und/oder dass die Metallstreifen des äußeren Zellenpols sind mit dem äußeren Stromabnehmer verschweißt. Auf diese Weise wird eine sichere und mechanisch belastbare elektrische Kontaktierung der Zellen gewährleistet, wobei die verschweißten Zellenpole darüber hinaus eine robuste Fixierung der Zellen innerhalb des Zellmoduls ermöglichen.

Gemäß einer vorteilhaften Ausgestaltung der Erfindung weist der äußere Stromabnehmer Ausnehmungen auf, wobei die streifenförmigen Leiter des äußeren Zellenpols durch die Ausnehmungen ragen und mit der radial nach außen weisenden Mantelfläche des äußeren Zellenpols verschweißt sind. Vorzugsweise handelt es sich bei den Ausnehmungen um horizontale (d.h. senkrecht zur Mittelachse verlaufende) Schlitze, die von den streifenförmigen Leitern durchragt werden. Die Leiter der äußeren Zellenpole sind außerhalb des äußeren Stromabnehmers vorzugsweise nach oben oder unten umgebogen und liegen flächig an der radial nach außen weisenden Oberfläche des äußeren Stromabnehmers an.

Gemäß einer vorteilhaften Ausgestaltung der Erfindung weist das Zellmodul eine elektrisch isolierende Abdeckung (Cover) auf, wobei die Abdeckung topfförmig ausgebildet ist und eine radiale Außenwand und eine obere Stirnfläche des Zellmoduls bildet. Insbesondere ist die Abdeckung von oben auf den Zellenstapel und den äußeren Stromabnehmer aufgesetzt und bildet nach oben und radial nach außen eine schützende und elektrisch isolierende Außenwand des Zellmoduls.

Gemäß einer vorteilhaften Ausgestaltung der Erfindung weist die Abdeckung an der oberen Stirnfläche des Zellmoduls eine mittig angeordnete erste Ausnehmung auf, wobei der innere Stromabnehmer die erste Ausnehmung durchragt. Vorzugsweise ragt der innere Stromabnehmer in Richtung der Mittelachse über die Abdeckung hinaus. Alternativ kann die obere Stirnfläche des Stromabnehmers planparallel zur oberen Stirnfläche verlaufen.

Gemäß einer vorteilhaften Ausgestaltung der Erfindung weist der äußere Stromabnehmer einen in Radialrichtung abstehenden Leiter auf, der einen Pol des Zellmoduls bildet. Alternativ kann der Stromabnehmer auch zwei oder mehr radial abstehende Leiter aufweisen, die zusammen den Pol des Zellmoduls bilden. Die radialen Leiter können insbesondere entweder am oberen Rand des äußeren Stromabnehmers oder an dessen unteren Rand angeordnet sein und beispielsweise einstückig mit dem äußeren Stromabnehmer ausgebildet sein.

Vorzugsweise durchragt der in Radialrichtung abstehende Leiter eine zweite Ausnehmung der Abdeckung, wobei die zweite Ausnehmung der Abdeckung insbesondere an einem unteren Rand der Abdeckung angeordnet ist.

Alternativ zu dem in Radialrichtung abstehenden Leiter und gemäß einer weiteren vorteilhaften Ausgestaltung der Erfindung weist der äußere Stromabnehmer einen senkrecht zur Radialrichtung verlaufenden Leiter auf, der einen Pol des Zellmoduls bildet. Alternativ kann der Stromabnehmer auch zwei oder mehr vertikale (d.h. senkrecht zur Radialrichtung verlaufende) Leiter aufweisen, die zusammen den Pol des Zellmoduls bilden. Die vertikalen Leiter können insbesondere entweder am oberen Rand des äußeren Stromabnehmers oder an dessen unteren Rand angeordnet sein und beispielsweise einstückig mit dem äußeren Stromabnehmer ausgebildet sein.

Vorzugsweise durchragt der senkrecht zur Radialrichtung verlaufende Leiter eine dritte Ausnehmung der oberen Stirnfläche der Abdeckung.

Für die Pouch-Zellen des erfindungsgemäßen Zellmoduls ergeben sich mehrere vorteilhafte Gestaltungsmöglichkeiten, die nachfolgend beschrieben werden. Die Details werden jeweils anhand einer einzelnen Zelle beschrieben, wobei vorzugsweise alle Zellen identisch gestaltet sind. Denkbar sind jedoch auch Zellmodule, bei denen verschiedene Ausführungsformen der Pouch-Zelle kombiniert werden.

Gemäß einer vorteilhaften Ausgestaltung der Erfindung ist vorgesehen, dass die Pouch-Zelle zwei ringförmige Kontaktelemente aufweist, wobei ein ringförmiges äußeres Kontaktelement an dem Außenrand der Pouch-Zelle angeordnet ist und ein ringförmiges inneres Kontaktelement an einem Innenrand des Durchgangslochs der Pouch-Zelle angeordnet ist, wobei ein Stromableiter der ersten Elektrode elektrisch leitend mit dem inneren Kontaktelement verbunden ist und ein Stromableiter der zweiten Elektrode elektrisch leitend mit dem äußeren Kontaktelement verbunden ist, wobei die flexible Außenhülle zwei elektrisch isolierende Folien umfasst, wobei sich jede der beiden Folien zwischen dem inneren und dem äußeren Kontaktelement erstreckt und die beiden Folien einander gegenüberliegende Stirnseiten der Pouch-Zelle bedecken. Die Stromableiter der Anode und Kathode, bzw. der Anoden und Kathoden, sind jeweils elektrisch leitend mit einem der beiden Kontaktelemente verbunden. Beispielsweise kann der Stromableiter der Anode mit dem inneren Kontaktelement und der Stromableiter der Kathode mit dem äußeren Kontaktelement verbunden sein, oder umgekehrt. Das innere und äußere Kontaktelement ist elektrisch leitend oder weist einen elektrischen Leiter auf, der den jeweiligen Stromableiter kontaktiert. Vorzugsweise sind die Kontaktelemente aus einem Metall beispielsweise aus dem gleichen Metall wie der jeweilige Stromabnehmer. Die Kontaktelemente können entweder flexibel, beispielsweise folienartig, oder starr ausgebildet sein. Die Außenhülle der Pouch-Zelle wird durch zwei Folien gebildet, die jeweils kreisförmig ausgebildet sind und in ihrem Mittelpunkt ein Durchgangsloch aufweisen, wobei sich jede der beiden Folien zwischen dem inneren und dem äußeren Kontaktelement erstreckt und auf diese Weise jeweils eine der beiden kreisringförmigen Stirnflächen der Zelle bildet. Vorzugsweise ist jede Folie mit beiden Kontaktelementen verbunden. Um eine dichtende Umhüllung zu bilden, kann jede der beiden Folien beispielsweise dichtend mit dem äußeren und/oder dem inneren Kontaktelement verbunden sein. Alternativ oder zusätzlich ist es möglich, dass ein radial außen liegender Randbereich der ersten Folie mit einem radial außen liegenden Randbereich der zweiten Folie dichtend verbunden ist (so dass das äußere Kontaktelement von den beiden Folien vollständig eingehüllt wird) und/oder ein radial innen liegender Randbereich der ersten Folie ist mit einem radial innen liegenden Randbereich der zweiten Folie dichtend verbunden (so dass das innere Kontaktelement vollständig von den beiden Folien eingehüllt wird). Das äußere Kontaktelement kann zwischen den beiden Folien radial nach außen hervorragen oder vollständig von den Folien eingeschlossen sein. Zusätzlich oder alternativ kann das innere Kontaktelement zwischen den beiden Folien radial nach innen hervorragen oder vollständig von den Folien eingeschlossen sein. Das jeweilige Kontaktelement kann über den gesamten inneren bzw. äußeren Umfang hinweg zwischen den Folien hervorragen oder nur über einen Teil des Umfangs hinweg, während es über einen anderen Teil des Umfangs hinweg vollständig von den Folien eingeschlossen ist. Vorzugsweise bilden die zwischen den Folien hervorragenden Teile des jeweiligen Kontaktelements einen positiven oder negativen Zellenpol der Pouch-Zelle. Ist das jeweilige Kontaktelement über den gesamten Umfang hinweg von den Folien eingeschlossen, so weist die Pouch-Zelle insbesondere zusätzliche leitende Elemente auf, die zwischen den Folien herausragen und mit dem Kontaktelement leitend verbunden sind, so dass die leitenden Elemente einen Zellenpol der Pouch-Zelle bilden.

Gemäß einer vorteilhaften Ausgestaltung der Erfindung weist die Pouch-Zelle eine Mehrzahl von Anoden und Kathoden auf, wobei die Anoden und Kathoden in einer Dickenrichtung der Pouch-Zelle derart stapelförmig angeordnet sind, dass sich Anoden und Kathoden abwechseln. Insbesondere sind die Elektroden als identisch geformte Kreisscheiben mit jeweils einem in ihrer Mitte angeordneten kreisförmigen Durchgangsloch ausgebildet. Die Elektroden sind in dem Stapel übereinander angeordnet, wobei die Durchgangslöcher in Deckung sind. Jede Elektrode weist einen Stromableiter auf, wobei die Stromableiter der Anoden mit dem inneren oder dem äußeren Kontaktelement verbunden sind, während die Stromableiter der Kathoden mit dem jeweils anderen Kontaktelement verbunden sind.

Vorzugsweise sind die Stromableiter der Anoden in einem radialen Randbereich der Stromableiter über den gesamten Umfang hinweg leitend mit dem zugehörigen Kontaktelement verbunden und/oder die Stromableiter der Kathoden sind in einem radialen Randbereich der Stromableiter über den gesamten Umfang hinweg leitend mit dem zugehörigen Kontaktelement verbunden. Insbesondere können die Stromableiter der Kathoden in einem radial außen liegenden Randbereich über den gesamten äußeren Umfang der Stromableiter hinweg mit dem äußeren Kontaktelement verbunden sein und die Stromableiter der Anoden können in einem radial innen liegenden Randbereich über den gesamten inneren Umfang hinweg mit dem inneren Kontaktelement verbunden sein. Analog ergibt sich eine alternative Konfiguration, bei der die Anoden mit dem äußeren Kontaktelement verbunden sind und die Kathoden mit dem inneren Kontaktelement verbunden sind.

Gemäß einer weiteren vorteilhaften Ausgestaltung der Erfindung weist die Pouch-Zelle eine Anode und eine Kathode auf, wobei die Anode und die Kathode spiralförmig um das Durchgangsloch angeordnet sind und einen zylindrischen Wickel bilden. Im Gegensatz zu der stapelförmigen Anordnung der Elektroden sind hier die Kathode, die Anode und der dazwischen angeordnete Separator zu einer Spirale geformt, wobei der Stromableiter einer Elektrode am radial innen liegenden Ende der Spirale das innere Kontaktelement kontaktiert, während der Stromableiter der anderen Elektrode am radial außen liegenden Ende der Spirale das äußere Kontaktelement kontaktiert. Insbesondere liegt die Anordnung aus Elektroden und Separator in Form eines spiralförmigen Bands oder Streifens vor, wobei die Breite der Bands bzw. Streifens im Wesentlichen der Dicke der Pouch-Zelle entspricht.

Eine vorteilhafte Ausgestaltung der Erfindung sieht vor, dass die Pouch-Zelle ein erstes und zweites Ableitelement aufweist, wobei das erste Ableitelement elektrisch leitend mit dem inneren Kontaktelement verbunden ist und den spiralförmig verlaufenden Stromableiter der ersten Elektrode an unterschiedlichen radialen Positionen elektrisch leitend kontaktiert, wobei das zweite Ableitelement elektrisch leitend mit dem äußeren Kontaktelement verbunden ist und den spiralförmig verlaufenden Stromableiter der zweiten Elektrode an unterschiedlichen radialen Positionen elektrisch leitend kontaktiert. Die Ableitelemente erstrecken sich insbesondere in gerader, in Radialrichtung verlaufender Linie und verbinden die spiralförmigen Stromableiter mit dem jeweiligen Kontaktelement. Vorzugsweise verläuft das erste Ableitelement um 90° oder 180° versetzt zum zweiten Ableitelement. Die Zelle kann auch vier oder mehr Ableitelemente aufweisen, wobei sich Ableitelemente, die den Stromableiter der Anode kontaktieren in Umfangsrichtung mit Ableitelementen abwechseln, die den Stromableiter der Kathode kontaktieren. Vorzugsweise verlaufen die vier oder mehr Stromableiter strahlenförmig in Radialrichtung und schließen konstante Winkel miteinander ein, d.h. sind über die Umfangsrichtung gleichmäßig verteilt.

Gemäß einer vorteilhaften Ausgestaltung der Erfindung weist das innere und/oder das äußere Kontaktelement einen elektrisch leitenden Zellenpol auf, der sich über den gesamten Innenrand beziehungsweise Außenrand der Pouch-Zelle erstreckt. Bei dieser Ausgestaltung verläuft der innere Zellenpol über den gesamten inneren Rand des Durchgangslochs der Zelle und/oder der äußere Zellenpol verläuft über den gesamten Außenrand der Zelle. Die Zellenpole können im einfachsten Fall einstückig mit den Kontaktelementen ausgebildet sein oder die Kontaktelemente können ringförmige Zellenpole aufweisen und diese mit den Stromableitern der Elektroden verbinden.

Gemäß einer vorteilhaften Ausgestaltung der Erfindung weist das innere und/oder das äußere Kontaktelement einen streifenförmigen elektrischen Leiter auf, der sich in Radialrichtung erstreckt und einen Zellenpol der Pouch-Zelle bildet. Bei dieser Ausführungsform sind die Zellenpole nicht über den gesamten Umfang umlaufend ausgebildet, sondern bestehen aus leitenden, insbesondere metallischen Streifen, die radial nach außen bzw. innen abstehen und zur elektrischen Kontaktierung der Zelle dienen.

Gemäß einer vorteilhaften Ausgestaltung der Erfindung weist das innere und/oder das äußere Kontaktelement mindestens zwei streifenförmige elektrische Leiter auf, die sich in Radialrichtung erstrecken, wobei die streifenförmigen elektrischen Leiter gleichmäßig über die Umfangsrichtung verteilt angeordnet sind. Insbesondere wird der innere Zellenpol durch zwei Leiter gebildet, die am Innenrand des Durchgangslochs nach innen ragen und um 180° zueinander versetzt angeordnet sind. In ähnlicher Weise kann der äußere Zellenpol durch zwei Leiter gebildet sein, die am Außenrand der Zelle radial nach außen ragen und um 180° zueinander versetzt angeordnet sind. Analog kann der innere und/oder der äußere Zellenpol jeweils durch n streifenförmige Leiter gebildet sein, die um 360°/n gegeneinander versetzt sind.

Gemäß einer vorteilhaften Ausgestaltung der Erfindung sind die beiden Folien mit dem inneren und/oder dem äußeren Kontaktelement verschweißt und/oder verklebt. Insbesondere sind die beiden Folien mit dem inneren und/oder dem äußeren Kontaktelement gas- und flüssigkeitsdicht verschweißt und/oder verklebt. Insbesondere ragen das innere und/oder das äußere Kontaktelement zwischen den beiden Folien radial nach innen bzw. außen über die Folien hinaus. Die Kontaktelemente können dabei über den gesamten Umfang oder nur über einen Teil des Umfangs über die Folien hinausragen.

Gemäß einer vorteilhaften Ausgestaltung der Erfindung sind die beiden Folien an ihrem inneren radialen Rand und/oder an ihrem äußeren radialen Rand miteinander verschweißt und/oder verklebt. Insbesondere können die beiden Folien an ihrem inneren bzw. äußeren Rand über den gesamten inneren bzw. äußeren Umfang hinweg verschweißt und/oder verklebt sein und das entsprechende Kontaktelement vollständig umhüllen. Denkbar ist auch, dass die Kontaktelemente über einen ersten Teil des Umfangs hinweg über die Folien hinausragen und über einen zweiten Teil des Umfangs hinweg vollständig von den Folien eingehüllt sind.

Ein weiterer Gegenstand der Erfindung ist ein Fahrzeug, aufweisend eine Ausgestaltung des erfindungsgemäßen Zellmoduls. Für das Fahrzeug ergeben sich dieselben Ausgestaltungen und Vorteile, die in Bezug auf das Zellmodul beschrieben wurden.

Weitere Einzelheiten und Vorteile der Erfindung sollen nachfolgend anhand der in den Zeichnungen dargestellten Ausführungsbeispiele beschrieben werden. Hierin zeigt:
- Fig. 1: den Aufbau einer Ausführungsform des erfindungsgemäßen Zellmoduls in einer schematischen Explosionsdarstellung;
- Fig. 2: den Aufbau der Ausführungsform des erfindungsgemäßen Zellmoduls in einer Schnittdarstellung;
- Fig. 3: eine Ausführungsform der Pouch-Zelle;
- Fig. 4: einer Ausführungsform des erfindungsgemäßen Zellmoduls mit einer Abdeckung;
- Fig. 5: zwei übereinander gestapelte Zellmodule;
- Fig. 6: den Aufbau einer Ausführungsform der Pouch-Zelle in einer schematischen Darstellung;
- Fig. 7: eine stapelförmige Anordnung der Elektroden im Inneren der Pouch-Zelle; und
- Fig. 8: eine gewickelte Anordnung der Elektroden im Inneren der Pouch-Zelle;

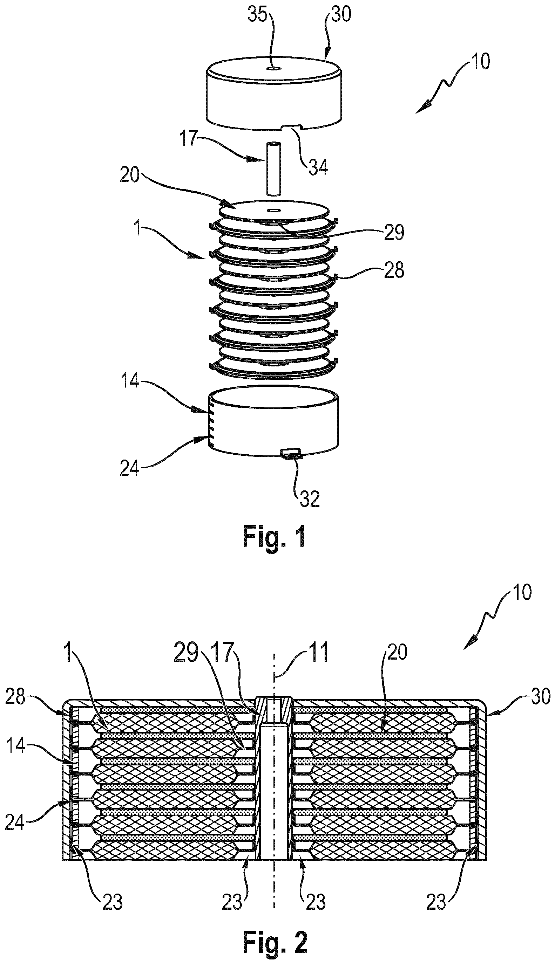

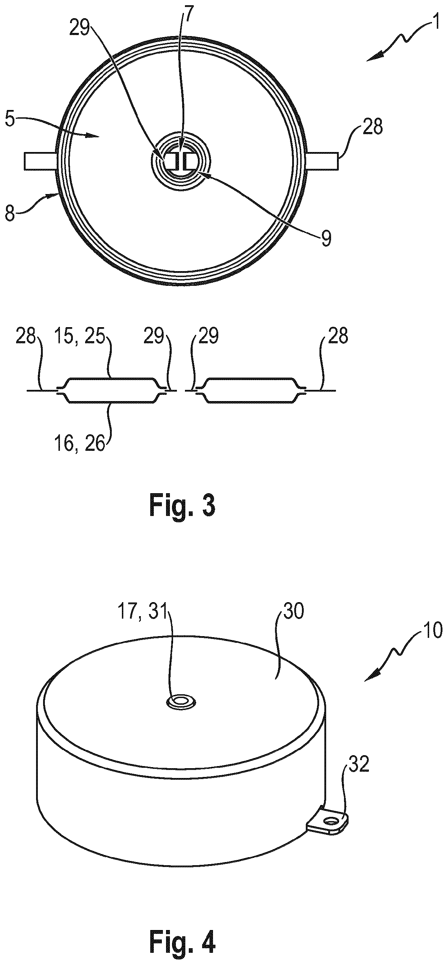

Die Darstellung in **Fig. 1** zeigt eine Explosionsdarstellung einer Ausführungsform des Zellmoduls 10. Das Zellmodul 10 wird von einem Stapel (Stack) von Pouch-Zellen 1 gebildet, zwischen denen jeweils ein Wärmeleitkissen 20 (Gap Pad) angeordnet ist. Jede der Pouch-Zellen 1 ist im Wesentlichen als Kreisscheibe mit einem mittig angeordneten Durchgangsloch 7 ausgebildet, wobei am radialen Außenrand 8 jeder Zelle 1 ein äußerer Zellenpol 28 und am Innenrand 9 des Durchgangslochs 7 ein innerer Zellenpol (29) angeordnet ist (zum Aufbau der Pouch-Zelle siehe **Fig. 3**). Die Zellenpole 28 und 29 der Zellen 1 werden jeweils von zwei radial abstehenden Metallstreifen 28, 29 gebildet. Die Wärmeleitkissen 20 sind ebenfalls Kreisscheiben mit einem zentralen Durchgangsloch. Durch die Durchgangslöcher 7 der Zellen 1 und die Durchgangslöcher der Kissen 20 verläuft der stabförmige innere Stromabnehmer 17, der sowohl als Haltelement für den Stapel, als auch zur elektrischen Kontaktierung der inneren Zellenpole 29 dient. Die äußeren Zellenpole 28 werden durch den äußeren Stromabnehmer 14 kontaktiert, der durch einen metallischen Zylindermantel 14 gebildet wird. Der zylindrische äußere Stromabnehmer 14 weist schlitzförmige Ausnehmungen 24 auf, die von den äußeren Zellenpolen 28 durchragt sind. Zusätzlich weist der äußere Stromabnehmer 14 an seinem unteren Rand einen radial abstehenden Anschluss 32 auf. Auf die Anordnung aus Zellen 1, Wärmeleitkissen 20 und innerem und äußerem Stromabnehmer 17, 14 wird von oben eine isolierende Abdeckung 30 (Cover) aufgesetzt, die an ihrer oberen Stirnfläche ein mittig angeordnetes Durchgangsloch 35 aufweist, das von dem inneren Stromabnehmer 17 durchragt wird. Das obere Ende des inneren Stromabnehmers 17 bildet damit einen ersten Pol (beispielsweise den positiven Pol) des Zellmoduls 10, während das aus der am unteren Rand der Abdeckung 30 angeordneten Ausnehmung 34 herausragende Anschlusselement 32 den entgegengesetzten Pol bildet.

Die Abbildung in **Fig. 2** zeigt das Modul 10 aus **Fig. 1** im zusammengesetzten Zustand in einer Schnittdarstellung. Der vertikale Stapel aus Pouch-Zellen 1 und Wärmeleitkissen 20 wird durch den inneren und den äußeren Stromabnehmer 17, 14 gehalten und stabil gelagert. Der innere Stromabnehmer 17, der sich entlang der Mittelachse 11 des Moduls 10 erstreckt, ist als metallischer Hohlzylinder ausgebildet, wobei der untere Abschnitt des Hohlzylinders 17 einen größeren Innenradius aufweist, als der obere Abschnitt. Die inneren Zellenpole 29 der Zellen 1 werden durch zwei Metallstreifen 29 gebildet, die im Durchgangsloch 7 des Zelle 1 radial nach innen ragen und so gebogen sind, dass sie flächig an der Mantelfläche des inneren Stromabnehmers 29 anliegen. Die äußeren Zellenpole 28 werden ebenfalls durch zwei Metallstreifen gebildet, die radial nach außen gerichtet sind und die schlitzförmigen Ausnehmungen 24 des äußeren Stromabnehmers 14 durchragen. Die Metallstreifen der äußeren Zellenpole 28 sind ebenfalls gebogen und liegen flächig an der radial nach außen weisenden Oberfläche des äußeren Stromabnehmers 14 an. Die inneren Pole 29 sind mit dem inneren Stromabnehmer 17 verschweißt und die äußeren Pole sind mit dem äußeren Stromabnehmer 14 verschweißt, so dass eine sichere und mechanisch belastbare elektrische Kontaktierung gewährleistet ist.

Die Darstellung in **Fig. 3** zeigt den Aufbau der Pouch-Zellen 1 aus **Fig. 1** und **Fig. 2****.** In der oberen Abbildung ist eine Aufsicht auf die Zelle 1 dargestellt, während unten ein schematischer Schnitt abgebildet ist. Die Zelle 1 weist einen kreisförmigen Außenrand 8 und eine zentrales Durchgangsloch 7 mit einem ebenfalls kreisförmigen Innenrand 9 auf. Die Elektroden 2, 3 der Zelle sind von der flexiblen Außenhülle 5 gas- und flüssigkeitsdicht eingeschlossen, wobei die Hülle 5 aus zwei Folien 15, 16 gebildet wird, die jeweils die obere und untere Stirnfläche 15, 16 der Zelle 1 bedecken. Die Zellenpole 28, 29 werden von vier Metallstreifen 28, 29 gebildet, wobei die äußeren Pole 28 vom Außenrand 8 der Zelle aus radial nach außen abstehen und entlang des Umfangs um 180° zueinander versetzt angeordnet sind, während die inneren Pole 29 im Durchgangsloch 7 radial nach innen abstehen und ebenfalls um 180° zueinander versetzt sind.

Die Darstellung in **Fig. 4** zeigt das Zellmodul 10 mit dem elektrisch isolierenden Cover 30. Der positive Pol 31 des Moduls 10 wird durch den inneren Stromabnehmer 17 gebildet, der leicht aus der Öffnung 35 des Covers 30 hervorsteht. Der negative Pol 32 wird durch das aus der am unteren Rand der Abdeckung 30 angeordneten Ausnehmung 34 herausragende Anschlusselement 32 gebildet.

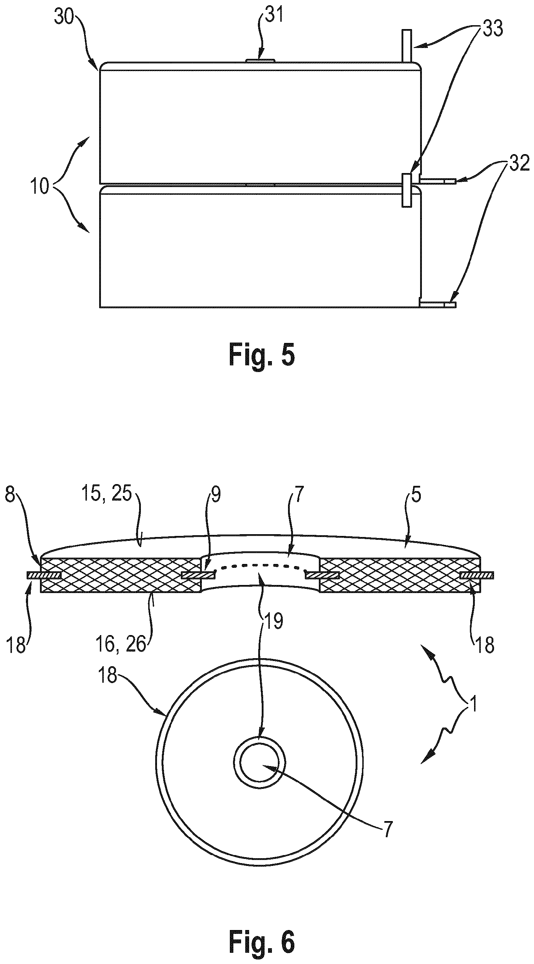

Die Darstellung in **Fig. 5** zeigt zwei übereinander gestapelte Zellmodule 10. Beispielsweise können die Module 10 so ausgebildet sein, dass die Unterseite des oberen Moduls 10 auf der oberen Stirnfläche der Abdeckung 30 einrastet um eine exakte Positionierung zu gewährleisten. Neben den radial nach außen weisenden Anschlüssen 32 zeigt die Abbildung eine alternative Ausgestaltung, bei der Anschlüsse 33 vertikal verlaufen.

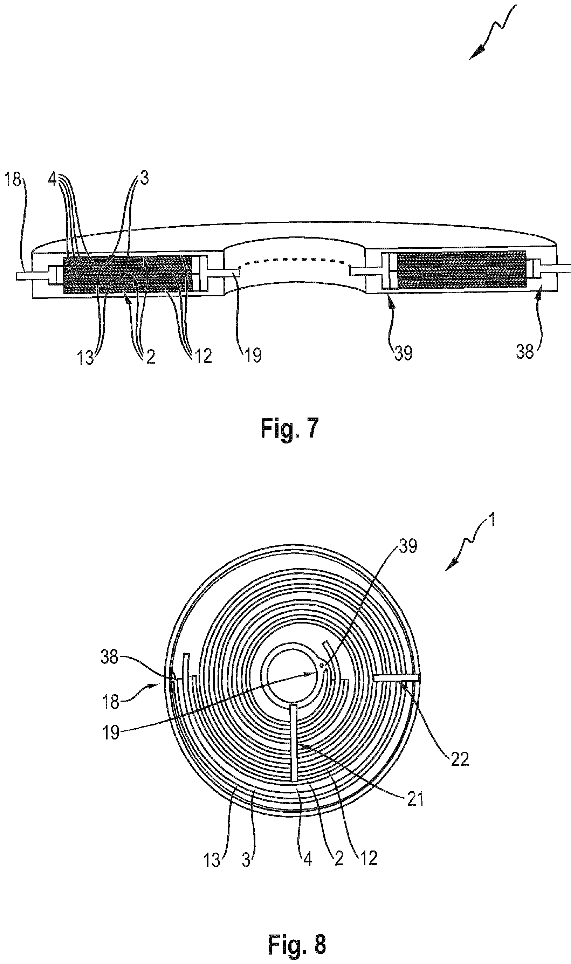

Die Darstellung in **Fig. 6** illustriert den schematischen Aufbau einer Ausführungsform der Pouch-Zelle 1. Dabei zeigt die obere Abbildung eine Seitenansicht mit einem Schnitt durch die Zelle 1 und die untere Abbildung eine Aufsicht auf die Zelle 1. Die Zelle 1 ist im Wesentlichen als Kreisscheibe ausgebildet und weist in ihrem Zentrum ein ebenfalls kreisförmiges Durchgangsloch 7 auf. Am kreisförmigen Außenrand 8 der Zelle 1 ist ein ringförmiges äußeres Kontaktelement 18 angeordnet, während am kreisförmigen Innenrand 9 des Durchgangslochs 7 ein inneres Kontaktelement 19 angeordnet ist. Die Kontaktelemente 18, 19 erstrecken sich jeweils über den gesamten Innen- bzw. Außenrand 9, 8 und dienen der elektrischen Kontaktierung der Elektroden 2, 3 im Inneren der Zelle 1 (vgl. **Fig. 7** und **Fig. 8**). Zwischen den Kontaktelementen 18, 19 erstrecken sich zwei flexible Folien 15, 16, die mit beiden Kontaktelementen 18, 19 verbunden sind und die obere und untere Stirnseite 25, 26 der Zelle 1 bedecken. Zusammen bilden die beiden Folien 15, 16 die flexible Außenhülle 5 der Zelle 1, in der die elektrochemisch aktiven Komponenten gas- und flüssigkeitsdicht eingeschlossen sind. Der innere Aufbau wird weiter unten anhand von **Fig. 7** und **Fig. 8** beschrieben.

Die Anbindung der Leiter 28, 29 aus **Fig. 3** an die Kontaktelemente 18, 19 in **Fig. 6** kann unterschiedlich realisiert werden. Beispielsweise können die beiden Folien 15, 16 mit dem jeweiligen (inneren oder äußeren) Kontaktelement 18, 19 verbunden sein und das Kontaktelement 18, 19 kann zwischen den Folien 15, 16 über den gesamten Umfang hinweg nach außen ragen. Die Metallstreifen 28, 29 können dann mit dem nach außen ragenden Teil des Kontaktelements 18, 19 verbunden sein oder mit diesem einstückig ausgebildet sein. Die Kontaktelemente 18, 19 können aber auch vollständig von den Folien 15, 16 eingeschlossen sein (beispielsweise indem die äußeren und inneren Randbereiche der Folien 15, 16 miteinander verschweißt oder verklebt sind), so dass nur die, mit den Kontaktelementen 18, 19 verbundenen Pole 28, 29 zwischen den Folien 15, 16 nach außen ragen.

Die Abbildung in **Fig. 7** zeigt eine Schnittdarstellung des inneren Aufbaus einer ersten Variante der Pouch-Zelle 1. Bei dieser Ausgestaltung sind die Elektroden 2, 3 als Stapel in der Zelle 1 angeordnet. Die mit dem inneren Kontaktelement 19 verbundenen Elektroden 2 können beispielsweise die Kathoden sein und die mit dem äußeren Kontaktelement 18 verbundenen Elektroden die Anoden. Für die Beschreibung wird die umgekehrte Zuordnung angenommen. Die Konfiguration besteht also aus drei Anoden 2, zwei Kathoden 3 (oder drei Kathoden 2, zwei Anoden 3) und vier, jeweils zwischen Anode und Kathode 2, 3 angeordneten Separatoren 4. Die Stapelfolge der Elektroden 2, 3 ergibt sich damit als Anode, Kathode, Anode, Kathode, Anode. Jede der Elektroden 2, 3 besteht aus einem flächigen Stromableiter 12 bzw. 13 der mit dem jeweiligen Aktivmaterial der Elektrode 2, 3 beschichtet ist. Jede einzelne Elektrode 2, 3 und die zugehörigen Separatoren 4 sind als Kreisscheibe mit zentralem Durchgangsloch ausgebildet, wobei die Stromableiter 12 der Anoden 2 über die innere Kontaktierung 39 zusammengeführt werden und mit dem inneren Kontaktelement 19 leitend verbunden sind, während die Stromableiter 13 der Kathoden 3 über die äußere Kontaktierung 38 zusammengeführt werden und mit dem äußeren Kontaktelement 18 verbunden sind. Die Kontaktierungen 38, 39 verbinden die Stromableiter 13, 12 jeweils über den gesamten inneren bzw. äußeren Umfang hinweg mit dem jeweiligen Kontaktelement 18, 19. Auf diese Weise wird durch die Kontaktelemente 18, 19 eine großflächige und entsprechend niederohmige Kontaktierung der Elektroden 2, 3 erzielt und gleichzeitig eine entsprechend großflächige Anbindung nach außen bereitgestellt.

Die abgebildete Konfiguration ist lediglich schematisch und beispielhaft zu verstehen. Die Anzahl an Anoden und Kathoden 2, 3 ist bei der erfindungsgemäßen Pouch-Zelle 1 nicht auf die dargestellte Zahl eingeschränkt und statt der dargestellten Zuordnung zwischen Anode 2 und Kathode 3 und dem inneren bzw. äußeren Kontaktelement 19, 18 kann auch umgekehrt die mit dem inneren Element 19 verbundene Elektrode 2 die Kathode bilden und die mit dem äußeren Element 18 verbundene Elektrode 3 die Anode.

Bei der in **Fig. 8** dargestellten zweiten Variante liegen die Elektroden 2, 3 im Gegensatz zu der gestapelten Anordnung aus **Fig. 7** als zylindrischer Wickel vor. Die erste Elektrode 2 (die vorzugsweise die Anode ist), die zweite Elektrode 3 (vorzugsweise die Kathode) und die dazwischen angeordnete Separatorschicht 4 bilden eine Spirale, die zwischen dem inneren und äußeren Kontaktelement 19, 18 angeordnet ist, wobei die erste Elektrode 2 am Kontaktpunkt 39 mit dem inneren Kontaktelement 19 verbunden ist, während die zweite Elektrode 3 am Kontaktpunkt 38 mit dem äußeren Kontaktelement verbunden ist. Neben den direkten Kontaktpunkten 38, 39 weist die Zelle 1 darüber hinaus zwei zusätzliche Ableitelemente 21, 22 auf, die die spiralförmig verlaufenden Stromableiter 12, 13 der Elektroden 2, 3 an unterschiedlichen radialen Positionen kontaktieren und auf diese Weise die Anbindung der Elektroden 2, 3 an die Kontaktelemente 18, 19 verbessern. Das erste Ableitelement 21 verläuft zu diesem Zweck in Radialrichtung und endet auf dem inneren Kontaktelement 19, während das zweite Ableitelement 22 in eine dazu senkrechte radiale Richtung verläuft und auf dem äußeren Kontaktelement 18 endet. Die Zelle 1 kann auch vier, sechs oder mehr Ableitelemente 21, 22 aufweisen, die strahlenförmig in Radialrichtung verlaufen und abwechselnd der Kontaktierung der ersten oder zweiten Elektrode 2, 3 dienen.

### Bezugszeichenliste

- 1: Pouch-Zelle
- 2: erste Elektrode
- 3: zweite Elektrode
- 4: Separator
- 5: Außenhülle
- 7: Durchgangsloch
- 8: Außenrand
- 9: Innenrand
- 10: Zellmodul
- 11: Mittelachse
- 12: Stromableiter der ersten Elektrode
- 13: Stromableiter der zweiten Elektrode
- 14: äußerer Stromabnehmer
- 15: erste Folie
- 16: zweite Folie
- 17: innerer Stromabnehmer
- 18: äußeres Kontaktelement
- 19: inneres Kontaktelement
- 20: Wärmeleitkissen
- 21: erstes Ableitelement
- 22: zweites Ableitelement
- 23: Verschweißung der Zellenpole
- 24: Ausnehmungen
- 25: erste Stirnseite der Pouch-Zelle
- 26: zweite Stirnseite der Pouch-Zelle
- 28: äußerer Zellenpol
- 29: innerer Zellenpol
- 30: Abdeckung
- 31: positiver Pol des Zellmoduls
- 32: radialer negativer Pol des Zellmoduls
- 33: vertikaler negativer Pol des Zellmoduls
- 34: Ausnehmung der Abdeckung
- 35: Durchgangsloch der Abdeckung
- 38: Kontaktierung der zweiten Elektrode
- 39: Kontaktierung der ersten Elektrode

## Patentansprüche

1. Zellmodul (10) mit einer Mehrzahl von elektrochemischen Pouch-Zellen (1), wobei jede Pouch-Zelle (1) mindestens eine erste und zweite Elektrode (2, 3), einen zwischen den Elektroden (2, 3) angeordneten Separator (4) und eine flexible Außenhülle (5) aufweist, **dadurch gekennzeichnet, dass** jede Pouch-Zelle (1) einen kreisförmigen Außenrand (8) und ein in ihrer Mitte angeordnetes kreisförmiges Durchgangsloch (7) aufweist, wobei an dem Außenrand (8) jeder Pouch-Zelle (1) ein äußerer Zellenpol (28) und an einem Innenrand (9) des Durchgangslochs (7) ein innerer Zellenpol (29) angeordnet ist, wobei das Zellmodul (10) einen zylinderstabförmigen inneren Stromabnehmer (17) und einen als Zylindermantel ausgebildeten äußeren Stromabnehmer (14) aufweist, wobei der innere Stromabnehmer (17) sich entlang einer Mittelachse (11) des Zellmoduls (10) erstreckt und der äußere Stromabnehmer (14) konzentrisch zu dem inneren Stromabnehmer (17) angeordnet ist, wobei die Pouch-Zellen (1) einen Stapel in Richtung der Mittelachse (11) bilden und so angeordnet sind, dass der innere Stromabnehmer (17) durch die Durchgangslöcher (7) der Pouch-Zellen (1) verläuft, wobei die inneren Zellenpole (29) elektrisch leitend mit dem inneren Stromabnehmer (17) verbunden sind und die äußeren Zellenpole (28) elektrisch leitend mit dem äußeren Stromabnehmer (14) verbunden sind.

2. Zellmodul (10) nach Anspruch 1, **dadurch gekennzeichnet, dass** zwischen den Pouch-Zellen (1) Wärmeleitkissen (2), Gap Pads, angeordnet sind.

3. Zellmodul (10) nach Anspruch 1 oder 2, **dadurch gekennzeichnet, dass** der innere Zellenpol (29) durch zwei streifenförmige Leiter gebildet ist und/oder der äußere Zellenpol (28) durch zwei streifenförmige Leiter gebildet ist, wobei sich die beiden Leiter in Radialrichtung erstrecken in Umfangsrichtung um 180° zueinander versetzt angeordnet sind.

4. Zellmodul (10) nach Anspruch 1 oder 2, **dadurch gekennzeichnet, dass** der innere Zellenpol (29) durch mindestens drei streifenförmige Leiter gebildet ist und/oder der äußere Zellenpol (28) durch mindestens drei streifenförmige Leiter gebildet ist, wobei sich die Leiter in Radialrichtung erstrecken und gleichmäßig über die Umfangsrichtung verteilt angeordnet sind.

5. Zellmodul (10) nach Anspruch 3 oder 4, **dadurch gekennzeichnet, dass** die streifenförmigen Leiter des inneren Zellenpols (29) mit dem inneren Stromabnehmer (17) verschweißt sind und/oder dass die Metallstreifen des äußeren Zellenpols (28) mit dem äußeren Stromabnehmer (14) verschweißt sind.

6. Zellmodul (10) nach Anspruch 5, **dadurch gekennzeichnet, dass** der äußere Stromabnehmer (14) Ausnehmungen (24) aufweist, wobei die streifenförmige Leiter des äußeren Zellenpols (28) durch die Ausnehmungen (24) ragen und mit der radial nach außen weisenden Mantelfläche des äußeren Zellenpols (28) verschweißt sind.

7. Zellmodul (10) nach einem der vorhergehenden Ansprüche, **dadurch gekennzeichnet, dass** das Zellmodul (10) eine elektrisch isolierende Abdeckung (30) aufweist, wobei die Abdeckung (30) topfförmig ausgebildet ist und eine radiale Außenwand und eine obere Stirnfläche des Zellmoduls (10) bildet.

8. Zellmodul (10) nach Anspruch 7, **dadurch gekennzeichnet, dass** die Abdeckung (30) an der oberen Stirnfläche des Zellmoduls (10) eine mittig angeordnete erste Ausnehmung (35) aufweist, wobei der innere Stromabnehmer (17) die erste Ausnehmung (35) durchragt.

9. Zellmodul (10) nach einem der vorhergehenden Ansprüche, **dadurch gekennzeichnet, dass** der äußere Stromabnehmer (24) einen in Radialrichtung abstehenden Leiter (32) aufweist, der einen Pol des Zellmoduls (10) bildet.

10. Zellmodul (10) nach Anspruch 9, **dadurch gekennzeichnet, dass** der in Radialrichtung abstehende Leiter (32) eine zweite Ausnehmung (34) der Abdeckung (30) durchragt, wobei die zweite Ausnehmung (34) der Abdeckung (30) insbesondere an einem unteren Rand der Abdeckung (30) angeordnet ist.

11. Zellmodul (10) nach einem der Ansprüche 1 bis 8, **dadurch gekennzeichnet, dass** der äußere Stromabnehmer (14) einen senkrecht zur Radialrichtung verlaufenden Leiter (33) aufweist, der einen Pol des Zellmoduls (10) bildet.

12. Zellmodul (10) nach Anspruch 11, **dadurch gekennzeichnet, dass** der senkrecht zur Radialrichtung verlaufende Leiter (33) eine dritte Ausnehmung der oberen Stirnfläche der Abdeckung (30) durchragt.

13. Fahrzeug, aufweisend ein Zellmodul (10) nach einem der Ansprüche 1 bis 12.

## Claims

1. A cell module (10) having a plurality of electrochemical pouch cells (1), each pouch cell (1) having at least a first and second electrode (2, 3), a separator (4) arranged between the electrodes (2, 3) and a flexible outer shell (5), **characterised in that** each pouch cell (1) has a circular outer edge (8) and a circular through-hole (7) arranged in its centre, an outer cell pole (28) arranged on the outer edge (8) of each pouch cell (1) and an inner cell pole (29) arranged on an inner edge (9) of the through-hole (7), wherein the cell module (10) has a cylindrical rod-shaped inner current collector (17) and an outer current collector (14) configured as a cylinder jacket, wherein the inner current collector (17) extends along a central axis (11) of the cell module (10) and the outer current collector (14) is arranged concentrically to the inner current collector (17), wherein the pouch cells (1) form a stack in the direction of the centre axis (11) and are arranged, such that the inner current collector (17) extends through the through-holes (7) of the pouch cells (1), wherein the inner cell poles (29) are electrically connected to the inner current collector (17) and the outer cell poles (28) are electrically conductively connected to the outer current collector (14).

2. The cell module (10) according to claim 1, **characterised in that** heat transfer pads (2), gap pads, are arranged between the pouch cells (1).

3. The cell module (10) according to claim 1 or 2, **characterised in that** the inner cell pole (29) is formed by two strip-shaped conductors and/or the outer cell pole (28) is formed by two strip-shaped conductors, wherein the two conductors extend in the radial direction and are arranged offset by 180° to one another in the circumferential direction.

4. The cell module (10) according to claim.1 or 2, **characterised in that** the inner cell pole (29) is formed by at least three strip-shaped conductors and/or the outer cell pole (28) is formed by at least three strip-shaped conductors, wherein the conductors extend in the radial direction and are evenly distributed over the circumferential direction.

5. The cell module (10) according to claim 3 or 4, **characterised in that** the strip-shaped conductors of the inner cell pole (29) are welded to the inner current collector (17) and/or that the metal strips of the outer cell pole (28) are welded to the outer current collector (14).

6. The cell module (10) according to claim 5, **characterised in that** the outer current collector (14) has recesses (24), wherein the strip-shaped conductors of the outer cell pole (28) protrude through the recesses (24) and are welded to the radially outwardly facing envelope surface of the outer cell pole (28).

7. The cell module (10) according to any one of the preceding claims, **characterised in that** the cell module (10) comprises an electrically insulating cover (30), wherein the cover (30) is pot-shaped and forms a radial outer wall and an upper end face of the cell module (10).

8. The cell module (10) according to claim 7, **characterised in that** the cover (30) on the upper end face of the cell module (10) comprises a centrally arranged first recess (35), wherein the inner current collector (17) protrudes through the first recess (35).

9. The cell module (10) according to any one of the preceding claims, **characterised in that** the outer current collector (24) comprises a conductor (32) projecting in the radial direction, which forms a cell of the cell module (10).

10. The cell module (10) according to claim 9, **characterised in that** the conductor (32) projecting in the radial direction protrudes through a second recess (34) of the cover (30), wherein the second recess (34) of the cover (30) is in particular arranged at a lower edge of the cover (30).

11. The cell module (10) according to any one of claims 1 to 8, **characterised in that** the outer current collector (14) comprises a conductor (33) running perpendicular to the radial direction, which forms a pole of the cell module (10).

12. The cell module (10) according to claim 11, **characterised in that** the conductor (33) running perpendicular to the radial direction protrudes through a third recess of the upper end face of the cover (30).

13. A vehicle comprising a cell module (10) according to any of claims 1 to 12.

## Revendications

1. Module cellulaire (10) comprenant une pluralité de cellules poches électrochimiques (1), chaque cellule poche (1) ayant au moins une première et une deuxième électrode (2, 3), un séparateur (4) agencé entre les électrodes (2, 3) et une coque extérieure flexible (5), **caractérisé en ce que** chaque cellule poche (1) a un bord extérieur (8) circulaire et un trou traversant (7) circulaire agencé en son centre, un pôle de cellule extérieur (28) agencé sur le bord extérieur (8) de chaque cellule poche (1) et un pôle de cellule intérieur (29) agencé sur un bord intérieur (9) du trou traversant (7), dans lequel le module cellulaire (10) a un collecteur de courant intérieur (17) en forme de tige cylindrique et un collecteur de courant extérieur (14) configuré comme un revêtement de cylindre, dans lequel le collecteur de courant intérieur (17) s'étend le long d'un axe central (11) du module cellulaire (10) et le collecteur de courant extérieur (14) est agencé de manière concentrique par rapport au collecteur de courant intérieur (17), dans lequel les cellules poches (1) forment un empilement dans la direction de l'axe central (11) et sont agencées, de telle sorte que le collecteur de courant intérieur (17) s'étende à travers les trous traversants (7) des cellules poches (1), dans lequel les pôles de cellule intérieurs (29) sont raccordés électriquement au collecteur de courant intérieur (17) et les pôles de cellule extérieurs (28) sont raccordés de manière électriquement conductrice au collecteur de courant extérieur (14).

2. Module cellulaire (10) selon la revendication 1, **caractérisé en ce que** des plaquettes de transfert de chaleur (2), des plaquettes d'interstice, sont agencées entre les cellules poches (1).

3. Module cellulaire (10) selon la revendication 1 ou 2, **caractérisé en ce que** le pôle de cellule intérieur (29) est formé par deux conducteurs en forme de bande et/ou le pôle de cellule extérieur (28) est formé par deux conducteurs en forme de bande, dans lequel les deux conducteurs s'étendentdans la direction radiale et sont agencés avec un décalage de 180° l'un par rapport à l'autre dans la direction circonférentielle.

4. Module cellulaire (10) - selon la revendication 1 ou 2, **caractérisé en ce que** le pôle de cellule intérieur (29) est formé par au moins trois conducteurs en forme de bande et/ou le pôle de cellule extérieur (28) est formé par au moins trois conducteurs en forme de bande, dans lequel les conducteurs s'étendent dans la direction radiale et sont répartis régulièrement sur la direction circonférentielle.

5. Module cellulaire (10) selon la revendication 3 ou 4, **caractérisé en ce que** les conducteurs en forme de bande du pôle de cellule intérieur (29) sont soudés au collecteur de courant intérieur (17) et/ou **en ce que** les bandes métalliques du pôle de cellule extérieur (28) sont soudées au collecteur de courant extérieur (14).

6. Module cellulaire (10) selon la revendication 5, **caractérisé en ce que** le collecteur de courant extérieur (14) a des évidements (24), dans lequel les conducteurs en forme de bande du pôle de cellule extérieur (28) font saillie à travers les évidements (24) et sont soudés à la surface d'enveloppe du pôle de cellule extérieur (28) tournée radialement vers l'extérieur.

7. Module cellulaire (10) selon l'une quelconque des revendications précédentes, **caractérisé en ce que** le module cellulaire (10) comprend un capot (30) électriquement isolant, dans lequel le capot (30) est en forme de cuve et forme une paroi extérieure radiale et une face d'extrémité supérieure du module cellulaire (10).

8. Module cellulaire (10) selon la revendication 7, **caractérisé en ce que** le capot (30) sur la face d'extrémité supérieure du module cellulaire (10) comprend un premier évidement (35) agencé au centre, dans lequel le collecteur de courant intérieur (17) fait saillie à travers le premier évidement (35).

9. Module cellulaire (10) selon l'une quelconque des revendications précédentes, **caractérisé en ce que** le collecteur de courant extérieur (24) comprend un conducteur (32) en projection dans la direction radiale, qui forme une cellule du module cellulaire (10).

10. Module cellulaire (10) selon la revendication 9, **caractérisé en ce que** le conducteur (32) en projection dans la direction radiale fait saillie à travers un deuxième évidement (34) du capot (30), dans lequel le deuxième évidement (34) du capot (30) est agencé en particulier au niveau d'un bord inférieur du capot (30).

11. Module cellulaire (10) selon l'une quelconque des revendications 1 à 8, **caractérisé en ce que** le collecteur de courant extérieur (14) comprend un conducteur (33) s'étendant perpendiculairement à la direction radiale, qui forme un pôle du module cellulaire (10).

12. Module cellulaire (10) selon la revendication 11, **caractérisé en ce que** le conducteur (33) s'étendant perpendiculairement à la direction radiale fait saillie à travers un troisième évidement de la face d'extrémité supérieure du capot (30).

13. Véhicule comprenant un module cellulaire (10) selon l'une quelconque des revendications 1 à 12.
